# EUROPÄISCHE PATENTSCHRIFT

(11) **EP 2 367 903 B1**
(45) Veröffentlichungstag und Bekanntmachung des Hinweises auf die Patenterteilung: **22.08.2018**
(21) Anmeldenummer: 09756734.1
(22) Anmeldetag: 20.11.2009
(51) Int. Cl.: C10G 1/00, C10G 1/10, C10J 3/57

(54) **VERFAHREN ZUR HERSTELLUNG VON SYNTHESEGAS UND/ODER FLÜSSIGEN ROHSTOFFEN UND/ODER ENERGIETRÄGERN AUS ABFÄLLEN UND/ODER BIOMASSEN**
PROCESS FOR THE PREPARATION OF SYNTHESIS GAS OR/ AND LIQUID RAW MATERIAL OR/AND ENERGY SOURCES FROM WASTES OR/AND BIOMASS
PROÉDÉ DE PRÉPARATION D'UN GAZ DE SYNTHÈSE OU/ET MATIÈRE PREMIÈRE LIQUIDE ET/OU PORTEURS D'ENERGIE À PARTIR DE DÉCHETS OU/ET DE BIOMASSE

(30) Priorität: 25.11.2008 DE 102008058967
(43) Veröffentlichungstag der Anmeldung: 28.09.2011
(73) Patentinhaber: Bergmann, Wenzel, 01877 Bischofswerda (DE)
(72) Erfinder: MÜLLER, Thomas, 01129 Dresden (DE)
(74) Vertreter: Wablat, Wolfgang
(86) Internationale Anmeldenummer: PCT/EP2009/065518
(87) Internationale Veröffentlichungsnummer: WO 2010/060862

(56) Entgegenhaltungen:
- WO-A1-2008/054190
- WO-A1-2008/102307
- US-A- 3 708 270
- US-A- 3 966 582
- US-A1- 2007 131 585

## Beschreibung

Die Erfindung betrifft ein Verfahren zum Recycling von Abfällen und anderen Stoffen, bei dem zunächst eine Solvolyse der organischen Bestandteile des Abfalls in einer alkalischen Lösung mit anschließender Abtrennung der sedimentierten anorganischen Bestandteile erfolgt. Weiterhin werden die organischen Bestandteile des Schleppdampfes vom Wasser getrennt und anschließend durch Rektifikation, Extraktion, Sorption oder Derivatisierung aufgetrennt und/oder Überführung durch thermochemische Wandlung (Vergasung) zu Brenn- oder Synthesegas aufgearbeitet.

Unter Abfällen wird im Rahmen der vorliegenden Anmeldung die Gesamtheit aller post-consumer- oder Produktionsrückstände bezeichnet, welcher sich der Besitzer entledigen will oder entledigen muss, und deren Haupt-Inhaltstoffe im Wesentlichen aus folgenden Komponenten bestehen, sowie deren Eigenschaften durch die folgenden Komponenten bestimmt werden:
- feste und flüssige Biomassen oder aus ihnen hergestellte Produkte,
- Kunststoffe (Polymere),
- Elastomere,
- anorganische Materialien, wie Mineralien, Metalle und Ihren Verbindungen,
- feste oder flüssige Stör- und/oder Gefahrenstoffe, wie z.B. Schwermetalle und ihre Verbindungen,
- halogensubstituierte organische Verbindungen, wie z.B. Flammschutzmittel,
- Wasser (Feuchte).

Die aus dem Stand der Technik bekannten Möglichkeiten einer stofflichen Nutzung sind bislang begrenzt. Bekannt sind Verfahren, welche versuchen, hydrodynamische Unterschiede zur Komponententrennung zu nutzen (z.B. Sichtung), oder Verfahren, die mittels instrumenteller analytischer Methoden (z.B. spektroskopischer), oder Verfahren, die auf Dichteunterschieden (Schwimm-Sink-Anlagen) oder Verfahren die Löslichkeitsunterschiede bestimmter Kunststoffe in - zumeist - organischen Lösungsmitteln aufsetzen.

Allen diesen Alternativen ist gemein, dass sie entweder zu unbefriedigenden Trennergebnissen führen und/oder wenn diese überhaupt eine stoffliche Nutzung ermöglichen, dann nur eine werkstoffliche Nutzung.

Weiterhin sind Verfahren bekannt, welche mit Hilfe thermochemischer Wandlungen, z.B. Vergasung, Pyrolyse, Reforming etc., Spalt- und/oder Umwandlungsprodukte erzeugen, die energetisch und/oder rohstofflich (z.B. Synthesegas, Monomere) genutzt werden können.

Außerdem sind Verfahren bekannt, die mittels Hydrierung unter drastischen Bedingungen (Prinzip Bergius) zu nutzbaren Produkten führen können.

Die meisten etablierten Müllverwertungsverfahren gehen von einer werkstofflichen Verwertung durch mechanische/physikalische Abfalltrennung aus.

Die dabei zurückgewonnenen, verwertbaren Stoffe, wie Folien, PVC etc., werden als relativ sortenreine Fraktionen oder zu Sekundärgranulaten verarbeitet weiterverkauft. Ein Teil dieser Stoffe wird zu neuen Produkten verarbeitet, die meist ein Down-Cycling darstellen, der kleinste Teil davon hat echte Marktchancen.

Nach der Aussortierung verbleibende Restfraktionen werden meist als Ersatzbrennstoffe aufgearbeitet und liefern mit der anschließenden Verwertung der im Abfall noch enthaltenen chemischen Energie durch Verbrennung Strom und Wärme.

Die Nutzung zur Energieerzeugung steht dabei aber oftmals nicht im Vordergrund, sondern die Abfallbeseitigung.

Letztlich geht bei der Verbrennung immer der in den Abfallkunststoffen enthaltene Herstellungsaufwand verloren, denn dieser ist meist weit höher als der Heizwert.

US 2007/0131585 A1 offenbart die Produktion von Diesel-Öl aus KW-haltigen Abfällen in einem Öl-Kreislauf mit Abscheidung der Feststoffe und Produkt-Destillation der Diesel-Produkte mittels Energie-Eintrag mit einem Hochgeschwindigkeits-Kammermischer und der Verwendung eines vollkristallinen Katalysators, der aus Kalium- Natrium- Kalzium- und Magnesium-Aluminium - Silikat besteht, wobei der Energie-Eintrag und die Umwandlung primär in dem Hochgeschwindigkeits-Kammermischer erfolgt.

Dementsprechend findet das Verfahren der US 2007/0131585 A1 in einer öligen Lösung / Ölsumpf mit Kristall-Katalysatoren statt. Das Verfahren der vor-liegenden Erfindung basiert auf einer Solvolyse in wässriger alkalischer Lösung, wobei keine Kristall-Katalysatoren eingesetzt werden.

US 3,966,582 ist auf die Gewinnung von Kohlenwasserstoffen (KW) aus kohlehaltigen Inputstoffen, im wesentlichen Sub-Anthrazit-Kohle, aber auch aus KohleTeer, schweren aromatischen Petroleum Rückständen, Pech, Kohle-Extrakten und ähnlichen kohlen-stoffhaltigen Materialien, gerichtet, die brennbar sind und damit als Brennstoffe eingeordnet werden können.

Es wird ein Kohle-haltiger Reaktand in einem geschmolzenen Salz gelöst, wonach Dampf mit aktivem Wasserstoff zugegeben wird. Das Verfahren ist klar auf die Hydrierung des Kohlenstoffs gerichtet. Druck, Temperatur, sowie der gesamte Prozess sind auf die Hydrierung von fast reinem Kohlenstoff ausgerichtet (T=260-600°C), was auch aus den extrem kurzen Reaktionszeiten von weniger als 10 Sekunden ersichtlich ist. Die deutlich höheren Temperaturen der US 3,966,582 sind erforderlich, da erst in diesem Bereich die Voraussetzungen für eine Hydrierung geschaffen werden.

WO/2008/054190 A1 beschreibt ein Verfahren zur Umwandlung von Abfall in Kraftstoffe und andere Nebenprodukte mit folgenden Stufen:
1) Behandlung des Abfall in einem alkalischen Medium um einen Abfall-Strom zu er-halten
2) Degradation (d.h. es erfolgt pyrolytischer Abbau) des Abfall-Stroms bei einer Temperatur von 300 - 370 °C und einem Druck von 8.4 - 17,5 MPa um einen Produkt-Strom zu erhalten
3) Reinigen des Produkt-Stroms durch Abtrennung der Verunreinigungen einschließlich der Salze und alkalischen Substanzen
4) Fraktionierung des gereinigten Produkt-Stroms in eine gasförmige Brennstoff-Fraktion, eine Leichtöl-Fraktion und eine Wasser-Fraktion.

Durch die hohen Temperaturen werden bei einem Verfahren nach WO/2008/054190 A1 die olefinischen Bestandteile gecrackt, so dass eine KW-Dampf-Fraktion entsteht. Das cracken der Kunststoffe ist wiederum Voraussetzung, um einen Kraftstoff zu gewinnen.

WO/2008/102307 A1 weist sehr viel Ähnlichkeit mit dem Verfahren der US 2007/0131585 A1 auf. Das Verfahren der WO/2008/102307 A1 findet wieder in einer öligen Lösung unter Verwendung von Katalysatoren statt. In WO/2008/102307 A1 wird ein ähnliches System wie bei US 2007/0131585 A1 beschrieben, d.h. die Vermischung mit Öl, die Zugabe von Katalysatoren, Neutralisatoren und anderen Additiven mittels einer Reaktionsturbine, die über die kinetische Energie dem Prozess Wärme zuführt. Die dadurch entstehenden Zerfallsprodukte der eingesetzten Kunststoffe sollen dann als KW-Dämpfe ausgetragen und zu Kraftstoffen kondensiert werden.

US 3,708,270 gewinnt Pyrolyse-Gas und Kohle über die Pyrolyse der kohlenstoffhaltigen Inputstoffe in einer Salzschmelze bei sehr hohen Temperaturen (400°C bis 1.300°C). Ein entscheidender Unterschied ist somit die deutlich höhere Temperatur, welche zur Pyrolyse führt. Weiterhin arbeitet das Verfahren der US 3,708,270 bei Normaldruck.

Aus der DE 197 50 327 C1 ist ein Verfahren zur Herstellung von Synthesegas aus nachwachsenden cellulosehaltigen Roh- oder Abfallstoffen bekannt, das insbesondere durch seine Konsistenz für eine nachfolgende Verbrennung in Verbrennungskraftmaschinen, aber auch für Synthesen geeignet ist. In diesem Verfahren sollen auch kontaminierte zellulosehaltige Stoffe, wie z.B. Abfallholz, verwertbar werden. Ein Recycling von Mischabfällen ist hier aber nur bedingt realisierbar.

Ausgehend hiervon war es Aufgabe der vorliegenden Erfindung, unabhängig vom Anteil der jeweiligen Komponenten, einen hohen Nutzungsgrad der in den Abfällen enthaltenen Stoffe und/oder den aus ihnen freisetzbaren Energien zu schaffen. Insbesondere soll es die Erfindung ermöglichen, Stoffe aus den Abfällen zu gewinnen, welche eine hohe Wertschöpfung des Gesamtprozesses ermöglichen. Dabei wird sich u.a. an den derzeit nur schwer stofflich nutzbaren Schredderrückständen aus der Auto- und Mischabfallverwertung, anderen Abfallschüttgütern, Mischabfällen, Sortierresten, Rechengut, Sonderabfällen sowie verschiedensten Produktionsrückständen mit einem hohen, meist schwer bestimmbaren Problemstoffanteil (PVC, Flammschutzmittel etc.) orientiert.

Diese Aufgabe wird durch das Verfahren mit den Merkmalen des Anspruchs 1 gelöst. Die weiteren abhängigen Ansprüche zeigen vorteilhafte Weiterbildungen auf.

Der erste Verfahrensschritt beruht darauf, dass organische Bestandteile des Abfalls mittels Solvolyse behandelt werden, so dass sie im Anschluss in mindestens einer flüssigen Phase vorliegen. Im Folgenden wird beispielhaft beschrieben, welche chemischen Reaktionen die einzelnen Komponenten des Abfalls durchlaufen.

### Biopolymere

### Cellulose

Cellulose unterliegt in der heißen, wässrigen, alkalischen Lösung einem Moleküllabbau (Peeling-Reaktion). Dies führt zur Bildung von Verbindungen, welche polyfunktionell sind. Insbesondere sind Hydroxyl- und Carboxylgruppen in den Produkten vorherrschend.

### Lignin

Lignin wird im Wesentlichen zu verschiedenen Phenolderivaten abgebaut. Auf Grund der hohen Acidität der Phenole (Mesomeriestabilisierung, induktive Effekte der Arylreste) liegen die Gleichgewichte der Salzbildung sehr weit auf der Seite Salze. Dadurch sind diese Produkte gut in dem polaren Lösungsmittel löslich.

### Fettsäuren

Die biogenen Fettsäuren verseifen zu Carbonsäuresalzen und Propantriol, unter den gegebenen Bedingungen liegen auch die Alkoholkomponenten fast quantitativ in der deprotonierten Form vor. Bei sehr langen Verweilzeiten erfolgt ein allmählicher Abbau der Carbonsäuren durch Decarboxylierung.

### Proteine

Proteine werden zu einer Vielzahl von Verbindungen abgebaut. Dabei entstehen auch viele übel riechende Verbindungen, z.B. Thiole, Amine, Ammoniak.

### Heteroatomfreie Massenkunststoffe/Polymere

### Polyolefine

Polyolefine werden durch die Solvolyse kaum verändert, sie schmelzen auf, wobei insbesondere Polypropylen bei Temperaturen von ca. 200 °C sehr hochviskos ist. Es ist daher sinnvoll, Öl als Lösungsmittel zuzugeben und so die Viskosität zu Gunsten der Pumpfähigkeit abzusenken.

### Bitumenmassen

Bitumen werden im Wesentlichen nur geschmolzen und schwimmen als (bei der Reaktionstemperatur) niedrigviskose Phase auf.

### Teermassen

Teere, welche vorwiegend Aromaten enthalten, werden zum Teil in lösliche Verbindungen überführt, der größte Teil jedoch liegt (bei der Reaktionstemperatur) als niedrigviskose, aufschwimmende Phase vor.

### Polystyrol

Für PS ist ein rein thermisch induzierter Abbau zu Monomeren bzw. Oligomeren erst ab 250 °C üblich. Unter gegebenen Bedingungen kommt es dennoch durch die Einflüsse von in den Molekülverband eintretenden organischen Verbindungen und durch die mechanische Bewegung des Rührens zum vorgenannten Abbau.

### Heteroatom-haltige Massenkunststoffe

### Polvethylentherephtalat/Polvester

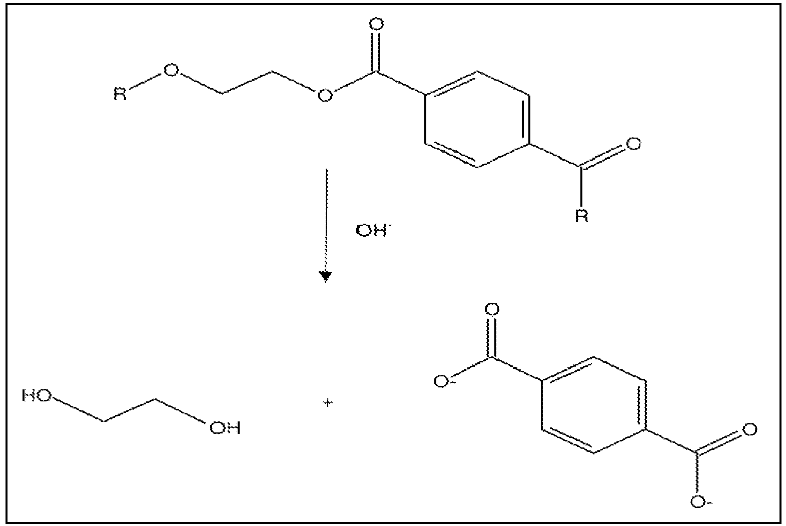

PET stellt chemisch gesehen ein Ester der Terephthalsäure und Ethandiol dar, unter den Bedingungen der Solvolyse wird dieses zu Ethandiol und Terephthalsäure hydrolysiert. Die beiden Produkte liegen entsprechend den thermodynamischen Gleichgewichten hautsächlich in ihrer Salzform vor. In der Wärme ist das Terephthalat gut löslich.

### Polyvinylchlorid

Ziel der Solvolyse beim PVC ist die Substitution des organisch gebundenen Chlors. Organisch gebundenes Chlor birgt bei seiner Verarbeitung unter Erwärmung hohe Risiken, zum einem kann es durch Eliminierung zum Abspalten von HCl kommen (deutlich ab 200 °C), welche zu neuen (toxischen) Verbindungen durch Substitutionsreaktionen führen kann. Zum anderen kann die kovalente Bindung C-Cl mit annähernd gleichen.

Elektronegativitäten zum homolytischen, durch Wärme induzierten Bindungsbruch führen. Die daraus resultierenden Radikale führen dann zu unkontrollierbaren Reaktionen, bei denen hochtoxische Produkte entstehen können. Um dem vorzubeugen, wird durch die Solvolyse sichergestellt, dass die u.g. Reaktion abläuft. Die Triebkraft der Reaktion ist die Basizität der Abgangsgruppe (Cl⁻ bessere Abgangsgruppe da geringe Basizität der konjugierten Base).

### Polyurethan

Polyurethane lassen sich durch die Solvolyse nicht wie beispielsweise PET in Monomere spalten, sondern spalten in die entsprechende Alkoholkomponente und Diamine. Aus den Diaminen können mit Phosgen wieder Diisocyanate dargestellt werden.
Im folgenden Beispiel entsteht als Alkoholkomponente 1,4-Butandiol:

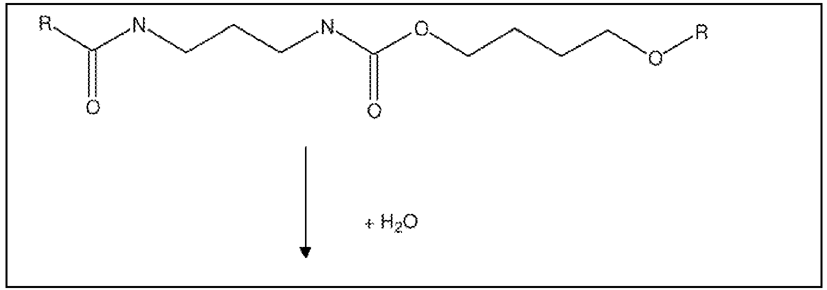

### Polyamid

Die Hydrolyse von Polyamid führt ebenfalls zu Diamin und Alkohol

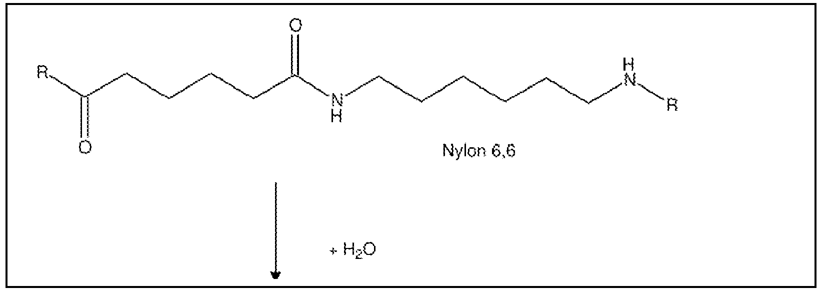

### Füllstoffe aus Kunststoffen

### Anorganische Füllstoffe

Anorganische Füllstoffe dienen z.B. der Erhöhung der Festigkeit von Kunststoffen, beispielsweise glasfaserverstärkte Kunststoffe, der Erhöhung der thermischen Belastbarkeit oder aber auch einfach zum "Strecken" der Kunststoffe.

Zum Einsatz kommen u.a.
- Kieselsäure, auch siliert,
- Quarzmehl,
- Silikate bzw. gemischte Silikate von Alkalimetallen und Erdalkalimetallen, Aluminium, Eisen und Zirkon,
- Oxide bzw. Mischoxide von Erdalkalimetallen, Aluminium, Silizium und Zink,
- Hydroxide bzw. Mischhydroxide des Calcium, Magnesium und Aluminium,
- Carbonate bzw. gemischte Carbonate des Calcium, Magnesium und Aluminium,
- Sulfate bzw. gemischte Sulfate des Calcium und Barium,
- Calciumsulfoaluminat,
- Aluminiumpulver und Aluminumbronze,
- Graphit,
- Glasfasern,
- Mikroglaskugeln,
- Dialuminium-hexamagnesium-carbonat-hexadecahydroxid-tetrahydrat,
- Magnesium-Natrium-Fluorid-Silikat,
- Schwermetalle in Form von Seifen.

Diese Stoffe sammeln sich z.T. in leicht veränderter Form im Sediment an, nachdem sie aus der Kunststoffmatrix herausgelöst sind. Bei einzelnen Kunststoffen kann der Anteil der Füllstoffe über 50 % betragen.

### Weitere Begleitstoffe von Kunststoffen

### Flammschutzmittel

Die wichtigsten Vertreter sind polybromierte Diphenylether (PentaBDE, OctaBDE, DecaBDE), TBBPA und HBCD. Bis in die 70er Jahre wurden außerdem polybromierte Biphenyle (PBB) als Flammschutzmittel verwendet. Zu den chlorierten Flammschutzmitteln zählen z.B. Chlorparaffine und Mirex. Mit Ausnahme von TBBPA werden diese Substanzen nur als additive Flammschutzmittel eingesetzt. Haupteinsatzbereiche sind Kunststoffe in elektrischen und elektronischen Geräten, z.B. Fernseher, Computer, in Textilien, z.B. Polstermöbel, Matratzen, Vorhänge, Sonnenstoren, Teppiche, in der Automobilindustrie, z.B. Kunststoffbestandteile und Polsterüberzüge und im Bau, z.B. Isolationsmaterialien und Montageschäume. Vor allem bei Bränden stellen halogenierte Flammschutzmittel eine große Gefahr dar. Unter der Hitzeeinwirkung wirken sie zwar brandhemmend, indem die bei der Pyrolyse gebildeten Halogen-Radikale die Reaktion mit Sauerstoff hemmen. Allerdings entstehen auch hohe Konzentration an polybromierten (PBDD und PBDF) oder polychlorierten Dibenzodioxinen und Dibenzofuranen (PCDD und PCDF). Diese sind auch unter dem Überbegriff "Dioxine" für ihre hohe Toxizität bekannt ("Seveso-Gift").

TBBPA stellt einen Spezialfall der bromierten Flammschutzmittel dar. Es wird hauptsächlich als reaktives Flammschutzmittel eingesetzt, d.h. es wird chemisch in die Polymermatrix, z.B. in Epoxidharze von Leiterplatten, eingebunden und stellt einen festen Bestandteil des Kunststoffes dar. Weitere reaktive bromierte Flammschutzmittel sind z.B. Brom- und Dibromstyrol, sowie Tribromphenol. Ins Polymer eingebunden, sind die Emissionen dieser Flammschutzmittels sehr gering, und stellen meistens keine Gefahr dar. Die Dioxinbildung ist dennoch nicht grundsätzlich geringer. Im geringeren Maß wird TBBPA jedoch auch als additives Flammschutzmittel eingesetzt. Über die Abbauprodukte des durch Licht leicht zersetzlichen TBBPA liegen erst sehr wenige Daten vor.

Alle oben genannten bromierten Flammschutzmittel haben eine ausführliche Risikobewertung im Rahmen der EU Altstoffverordnung 793/93/EWG durchlaufen oder sind in der Endphase dieser Risikobewertung. Als Resultat wurden PentaBDE und OctaBDE verboten, da sie sich in der Umwelt anreichern, persistent und toxisch sind. Es wurde kein Risiko für Mensch und Umwelt für DecaBDE gefunden, auch für TBBPA wurde kein Risiko für die Gesundheit gefunden. Bei DecaBDE sind in letzter Zeit wieder Diskussionen aufgekommen, da neue Untersuchungen gezeigt haben, dass die Substanz unter Einfluss von UV-Strahlung debromiert werden kann und somit auch die kürzlich verbotenen OctaBDE und PentaBDE gebildet werden können.

Die Gefahrenpotentiale von Flammschutzmitteln, wie polybromierten Diphenylethern (PBDE) und polybromierten Biphenylen (PBB) in Bezug auf deren Bildung von PBDD/F haben zu einem Verbot durch die EU geführt (WEEE, RoHS, ElektroG). Eine Ausnahme bildet DecaBDE, das von diesem Verbot ausdrücklich ausgenommen ist.
Durch die Solvolyse werden große Anteile diese halogenierten organischen Verbindungen nach ähnlichen Mechanismen wie beim PVC beschrieben verändert, so dass sich das Gefahrenpotential bei thermischen Zerfallsreaktionen wesentlich verringert.

### Anorganische Begleitfachten

### Anorganische Flammhemmer

### Organophosphor-Flammschutzmittel:

Bei dieser Verbindungsklasse werden typischerweise aromatische und aliphatische Ester der Phosphorsäure eingesetzt, wie beispielsweise:
- TCEP (Tris(chlorethyl)phosphat),
- TCPP (Tris(chlorpropyl)phosphat),
- TDCPP (Tris(dichlorisopropyl)phosphat),
- TPP (Triphenylphosphat),
- TEHP (Tris-(2-ethylhexyl)phosphat),
- TKP (Trikresylphosphat),
- ITP ("Isopropyliertes Triphenylphosphat"), Mono-, Bis- und Tris(isopropylphenyl)phosphate unterschiedlichen Isopropylierungsgrades,
- RDP (Resorcinol-bis(diphenylphosphat)),
- BDP (Bisphenol-A-bis(diphenylphosphat)).

Diese Flammschutzmittel kommen beispielsweise bei weichen und harten PUR-Schäumen in Polstermöbeln, Fahrzeugsitzen oder Baumaterialien zum Einsatz. In letzter Zeit werden BDP und RDP jedoch zunehmend als Ersatzstoffe für OctaBDE in Elektrogeräte-Kunststoffen eingesetzt.

Anorganische Flammschutzmittel sind beispielsweise:
- Aluminiumhydroxid (Al(OH)₃), das weltweit am meisten eingesetzte Flammschutzmittel (auch ATH für "Aluminiumtrihydrat" genannt). Es wirkt, durch Abspaltung von Wasser, kühlend und gasverdünnend, muss aber in großen Anteilen (bis zu 60 %) zugemischt werden.
- Magnesiumhydroxid (Mg(OH)₂, MDH, "Magnesiumdihydrat") ist ein mineralisches Flammschutzmittel mit höherer Temperaturbeständigkeit als ATH, aber mit gleicher Wirkungsweise.
- Ammoniumsulfat ((NH₄)₂SO₄) und -phosphat ((NH₄)₃PO₄) verdünnen das Gas in der Flamme durch Abspaltung von Ammoniak (NH₃), welches zu Wasser und unterschiedlichen Stickoxiden verbrennt und der Flamme dadurch den Sauerstoff entzieht. Gleichzeitig bewirken sie die Bildung einer Schutzschicht durch die entstehende Schwefel- (H₂SO₄) bzw. Phosphorsäure (H₃PO₄), die als eine ihrer Funktionen die Radikalkettenreaktion unterbrechen können. Die Säuren sind außerdem nicht brennbar, stark hygroskopisch und besitzen hohe Siedepunkte. Daher kondensieren sie im kühleren Bereich der Flamme und schlagen sich auf dem Material nieder. Phosphorsäure bildet durch Wasserabspaltung zusätzlich Meta- und Polyphosphorsäure, welche noch höhere Siedepunkte besitzen.
- Roter Phosphor bildet eine Schicht aus Phosphor- und Polyphosphorsäuren auf der Oberfläche und lässt diese aufquellen (Intumeszenz). Diese Schicht wirkt isolierend und schützt das Material vor Sauerstoffzutritt. Die hier gebildeten Phosphate haben die gleichen Eigenschaften wie die aus dem Ammoniumphosphat stammenden.
- Antimontrioxid (Sb₂O₃) wirkt nur als Synergist in Kombination mit halogenierten Flammschutzmitteln. Nachteilig ist seine katalytische Wirkung bei der Dioxin-Entstehung im Brandfall.
- Antimonpentoxid (Sb₂O₅) wirkt, ähnlich wie Sb₂O₃, als Synergist.
- Zinkborate (siehe Borate) wirken unter anderem durch Wasserabgabe des Borates kühlend und gasverdünnend. Zinkverbindungen können aber auch synergetisch wirken und teilweise das gefährlichere Antimontrioxid ersetzen.
- Gelöschter Kalk (Ca(OH)₂) wurde während des 2. Weltkriegs als Flammschutzmittel für das Holz der Dachstühle verwendet. Es bindet zunächst unter Wasserabspaltung Kohlendioxid aus der Luft und geht in Calciumcarbonat (CaCO₃) über. Als Schutzanstrich erschwert es den Zutritt von Sauerstoff.

Die anorganischen Flammenhemmer werden in z.T. etwas veränderter chemischer Form (z.B. als Kalziumphosphat) nach Auflösung der Kunststoffmatrix freigesetzt und sedimentieren.

### Metalle

Metalle in Oxidationsstufe 0 (gegebenenfalls mit oxidierter Oberfläche) stammen im Wesentlichen aus Bauteilen technischer Geräte, z.B. in Form von Draht, Blech, Profilen, Stäben, Gehäuseteilen, Schrauben, Metallfolien usw.

Metalle, welche sich weitestgehend edel gegenüber der Lösung verhalten, wie Eisen, Kupfer, Nickel usw., sedimentieren. Zuvor werden sie von eventuellen Verbundwerkstoffen, von Kabelisolierungen, aus eingegossenen Werkstoffen usw. befreit, indem der umgebende Kunststoff oder das umgebende Biopolymer (In Holz eingeschlagener Nagel) u.ä. in eine flüssige Form gebracht wurden.

Metalle, die sich gegenüber der Lösung unedel verhalten, werden chemisch verändert.

Aluminium geht unter Wasserstoffentwicklung in eine Aluminat-Form über. Aus dieser entstehen nach Alterung sedimentierende Verbindungen, z.B. Oxyhydrate.

Zink, Zinn, Arsen etc. gehen zunächst auch in lösliche Verbindungen über, aus denen dann die entsprechenden Sulfide gefällt werden können.

### Wasser

Wasser wird meist in Form von Feuchte in den Prozess eingetragen. In Abhängigkeit von der Zusammensetzung des Ausgangsmaterials und der Zielprodukte stellt das Wasser eine Bilanzgröße dar. Es laufen Prozesse unter Wasserverbrauch, z.B. Hydrolysen, oder unter Wasserabspaltung ab. Bei sehr trockenem Ausgangsmaterial muss meist eine geringe Menge Wasser zugesetzt werden.

Bei flüssigen Einstoffsystemen steht der Dampfdruck der Flüssigkeit nur in Abhängigkeit zur Temperatur. Dieser Sättigungsdampfdruck wird über die Clausius-Clapeyron-Gleichung beschrieben. Bei Mehrstoffkomponentensystemen sind die Zusammenhänge komplexer. Sind die Komponenten nicht mischbar, so sind im Regelfall die Dampfdrücke der einzelnen Komponenten annähernd additiv (Daltonsches Gesetz). Für die ionischen Komponenten, welche im vorliegenden Fall aus den Ionen des gelösten Kaliumcarbonates und den in der Lösung in ionischer Form vorliegenden organischen Komponenten gebildet werden, gelten andere Gesetzmäßigkeiten. Hier wirken Komponenten, welche geringere Dampfdrücke als Wasser besitzen, dampfdruckerniedrigend. Diese kolligativen Eigenschaften werden allgemein durch das Raoultsche Gesetz beschrieben, sind jedoch bei so hohen Stoffkonzentrationen, wie im vorliegenden Fall, nur begrenzt anwendbar.

Der Einfluss der Salzkonzentration hat sich in der Praxis als für den Prozess entscheidende Größe herausgestellt.

Somit sind die Lösungskonzentration und die Temperatur entscheidende Parameter für den Dampfdruck, d.h. den Systemdruck. Dies gilt natürlich nur unter der Bedingung, dass gasförmige Reaktionsprodukte, wie z.B. CO₂ und NH₃ aus dem System ausgeschleust werden.

Regelungstechnisch ist es bevorzugt, Temperatur und Druck zu regeln, so dass sich die zugehörige Konzentration einstellt, d.h. überschüssiges Wasser verlässt das System. Nur wenn die wasserverbrauchenden Prozesse, z.B. Hydrolysen, überwiegen, ist eine Zugabe von Wasser notwendig. Durch Vergleich mit der p/TKurve ist dies MSR-technisch erkennbar.
Die Reaktionstemperatur beeinflusst neben dem Gleichgewichtsdruck im System hauptsächlich folgende Größen:
- die Kinetik der Solvolyseprozesse,
- die sekundären Zerfallsreaktionen,
- die Viskosität der Ausgangsstoffe und
- den Partialdruck der organischen Komponenten im Schleppdampf.
Die Reaktionstemperatur ist im Bereich von 150 bis 250 °C. Die Reaktionszeiten liegen vorzugsweise im Bereich von 2 bis 20 Stunden (Chargenbetrieb) und die Gleichgewichtsdrücke vorzugsweise bei 4 bis 10 bar.
Die Solvolyse kann als Batch- oder quasi-kontinuierliches Semi-Batchverfahren im Rührkessel oder Umlaufreaktor oder einer Kombination aus beiden durchgeführt werden. Beide Varianten bieten Vorteile. Die Auswahl ist an Hand des zu erwartenden Input zu treffen. Ist das Vorprodukt sehr kleinteilig und duktil, so bietet die kontinuierliche Variante große Vorteile hinsichtlich der Raum/ZeitAusbeute. Für kleine Anlagen mit Fernüberwachung wird sich eher ein Batch-Betrieb als vorteilhaft erweisen.

Während der Solvolyse wird das Abfallgut gerührt. Das kann durch mechanische Rührer, z.B. Ankerrührer, oder durch das Bewegen der Flüssigkeit im Umlaufreaktor erfolgen. Hier ist ebenso nach dem zu erwartenden Input zu entscheiden.

Der Austrag des Bodenkörpers kann ebenfalls chargenweise oder kontinuierlich erfolgen. Wenn die Gefahr besteht, dass im Abfallgut lange Drähte/Drahtseile vorhanden sind, ist ein chargenweiser Austrag sinnvoll.

Es ist bevorzugt, dass die organischen Bestandteile nach dem Austrag mit recyclierter alkalischer Lösung und/oder Wasser gewaschen werden. Da in den Zwischenräumen der anorganischen Bestandteile häufig durch Adhäsion gebundene oder durch Adsorption fixierte
Aufschlusslösung vorzufinden ist, ist das Waschen der anorganischen Bestandteile ein empfehlenswerter Verfahrensschritt. Das Waschwasser kann dann anschließend der Aufschlusslösung wieder zugeführt werden.

Am Reaktor direkt angeschlossen ist eine Rektifikationskolonne, wobei der Sumpf der Kolonne vorzugsweise vom Reaktor räumlich getrennt ist. Nach der Kolonne (also in Reihenschaltung) wird bevorzugt ein Druckregler angeordnet, der den Systemdruck auf dem Gleichgewichtsdruck konstant hält. So werden bei der Solvolyse frei werdende Gase, die in nur sehr geringen Mengen gebildet werden, aus dem System ausgetragen.

Es ist weiter bevorzugt, dass die organischen Bestandteile durch Extraktionsverfahren, bevorzugt als Öle, aus dem System ausgetragen werden. Optional ist es hier auch möglich, dass mittels Hydrolyse oder
Elektrolyse die Ausbeute bei der Extraktion bzw. der Destillation gesteigert wird.

Die Aufgabe der Rektifikationskolonne ist es, die entsprechend ihrem Dampfdruck (als Partialdruck) enthaltenen organischen Komponenten, deren Dampfdruck niedriger als der des Wassers ist, aus dem Schleppdampf über den Sumpf abzutrennen und aus dem System zu entfernen. Dadurch wird das thermodynamische System permanent gestört und Organik in den Dampf "nachgeliefert". Damit werden die organischen Bestandteile in einer kaliumfreien Form über den Kolonnensumpf abgeführt.

Der mit den organischen Bestandteilen beladene Wasserdampf wird bevorzugt von unten über den Sumpf in eine Kolonne geleitet, strömt über Füllkörper nach oben und die organischen Bestandteile werden durch abwechselnde Kondensations- und Verdampfungsprozesse im Dampf abgereichert. Anschließend verlässt der Dampf die Kolonne am Kopfende. Die abgetrennten organischen Bestandteile laufen hingegen in den Sumpf.

Durch das Kopfkondensat ist dabei vorzugsweise so viel Kondensationswärme durch Kondensation von Wasser zu entfernen, wie die kondensierenden organischen Komponenten an dieses Wasser als Verdampfungswärme abzugeben vermögen.

Die organischen Bestandteile werden bevorzugt auf zwei Wegen aus dem Solvolyse-Reaktor entfernt: Entweder durch eine Kolonne oder mittels Extraktion.

Ziel dabei ist es, kaliumfreie, möglichst niedrigviskose organische Verbindungen zu erhalten, welche auf Grund stoffspezifischer Eigenschaften, wie z.B. Dampfdruck, Polarität, dielektrischer Eigenschaften, Dichte usw. dann aufgetrennt werden können.

Eine Abtrennung über eine Kolonne erfordert dabei
einen ausreichenden Dampfdruck, während eine Extraktion ein weitgehend unpolares Verhalten der organischen Bestandteile erfordert.

Ein zu geringer Dampfdruck resultiert insbesondere aus zu großen Molekülen und/oder aus den zu starken intra- und intermolekularen Wechselwirkungen. Starke Bindungskräfte verhindern einen Austritt der Substanzen in die Dampfphase. Besonders stark sind diese Bindungskräfte (die keine echten chemischen Bindungen sind) bei sehr polaren Substanzen, also an funktionellen Gruppen, welche Heteroatome enthalten. Aber nicht nur das Vorhandensein von Heteroatomen alleine, sondern auch noch die entsprechenden Bindungsformen, also der Charakter der chemischen Funktionalität, bestimmt, wie stark die Bindungskräfte sind. Starke Bindungskräfte bewirken ein Absenken des Dampfdrucks, insbesondere dann, wenn die Verbindungen in Ihre Salzform übergehen (z.B. Carboxylate, Alkoxide, Thiolate etc.), also deprotonieren.

Für den Fall zu großer Molekülgröße ist die Substanz bei hinreichend geringer Polarität dann der Extraktion zugänglich, so dass hier insgesamt nur die Verringerung der Polarität erreicht werden muss. Eine geringe Polarität ist Voraussetzung für eine Extraktionsfähigkeit.

Zur Verringerung der Polarität der Substanz sind u.a. zwei Wege möglich, welche nachfolgend näher beschrieben werden. Ziel beider Maßnahmen ist es, eine quantitative Abtrennung der Organik zu erreichen, so dass eine thermische Regeneration der Salzlösung nicht notwendig ist.

Durch partielle Hydrierung können funktionelle Gruppen in eine andere "Oxidationsstufe", welche nicht so polar ist, also z.B. von Carboxyl nach Hydroxyl überführt werden. Die so erreichbaren geringen Säureeigenschaften (K_{S}-Wert) bewirken, dass ein höherer Anteil einer Substanz in einer protonierten Form vorliegt, welche einen Dampfdruck besitzt.

Dadurch erhöht sich der Partialdruck der organischen Komponente im Dampfraum, wodurch diese der Rektifikation zugänglich wird.

Weiterhin kann auch eine vollständige Hydrierung erfolgen, so dass die Funktionalität ganz beseitigt wird.

Zur Hydrierung bietet sich unter den vorherrschenden Bedingungen vorzugsweise Raney-Nickel als Katalysator an, dieser kann auch gegebenenfalls in vitro aktiviert werden. In der Alkalilösung ist dieser besonders aktiv. Entstehendes Wasser, H₂S, NH₃ usw., werden über den Druckregler ausgeschleust und gesondert behandelt.

Speziell die sehr polaren und stark zur Salzbildung neigenden Carboxylgruppen können auf eine sehr elegante Weise beseitigt werden. Durch eine Ein-Elektronen-Oxidation auf elektrochemischem Weg wird ein radikalischer Zerfall initiiert, welcher zur Decarboxylierung und zur Addition (im Sonderfall Dimerisierung) der Molekülreste führt. Dieser Mechanismus ist als Kolbe-Elektrolyse oder auch Kolbe-Synthese bekannt.

Die Extraktion kann kontinuierlich im Umlaufverfahren oder chargenweise erfolgen. In einigen Fällen, z.B. dann, wenn das Stoffgemisch große Mengen Bitumen enthält, kann auf den Einsatz von zusätzlichem Extraktionsmittel verzichtet werden, da dann bereits pumpfähige Viskositäten erreicht werden. Ebenfalls kann bei bestimmten Einsatzmaterialien, die weitgehend frei von z.B. Polyolefinen sind, auch auf den Einsatz von Extraktionsmitteln verzichtet werden.

Die Extraktionsmittel sollten so gewählt werden, dass diese entweder gut vom extrahierten Stoff/Stoffgemisch abtrennbar sind, z.B. durch Vakuumdestillation, oder gemeinsam mit dem extrahierten Stoff weiterverarbeitet werden, z.B. durch Hydrocracken, so dass wieder ausreichend Extraktionsmittel zur Verfügung steht. Es können ebenso preiswerte Extraktionsmittel, wie z.B. Altöl zum Einsatz kommen.

Die aus dem Sumpf der 1. Kolonne entnommenen Substanzen stellen ein mannigfaltiges Gemisch organischer Verbindungen dar. Aus diesem lassen sich Verbindungen abtrennen, welche einen guten Marktwert erzielen. Gleichzeitig stellt dies einen Weg des rohstofflichen Recyclings dar. Ebenfalls interessant ist in diesem Zusammenhang die CO₂-Bilanz, da zur Produktion dieser Stoffe aus fossilen Ressourcen, wie Erdöl, neben der rohstofflichen Basis auch sehr viel Prozessenergie verbraucht wird, welche in diesem Falle eingespart wird.

Zur Auftrennung der Gemische sind für gute Ausbeuten bevorzugt Kombinationen aus Rektifikation, Extraktion und Sorption zu nutzen.

Die Anteile, welche nicht trennbar sind und/oder für die kein ausreichender Markt vorhanden ist, können energetisch genutzt werden, oder an Weiterverarbeiter, wie z.B. Raffinerien, verkauft werden. Voraussetzung ist jedoch derzeit, dass die Gemische frei von Heteroatomen sind. Dies kann durch Hydrierung, gegebenenfalls in Verbindung mit Hydrocracken, erreicht werden.

Das Sediment wird vorzugsweise eluiert, d.h. gewaschen. Wird das Sediment nicht auf Metalle aufgearbeitet, so ist es bevorzugt, dem Spülwasser Sulfidionen zuzusetzen, um vorhandene Schwermetallsalze in schwerlösliche Sulfide zu überführen, um die Deponiefähigkeit des Substanzgemischs herzustellen.

Eine Aufarbeitung auf Metalle wird aber in vielen Fällen lohnend sein, da insbesondere durch Kunststoffe, wie PVC, sehr viele Schwermetalle (meist in Form von Seifen) eingebracht werden. Diese erzielen i.d.R. hohe Marktpreise. Für eine Trennung der einzelnen Metalle kommen, neben chemischen Trennungsverfahren, insbesondere elektrochemische Trennungsverfahren in Frage.

Nicht an jedem Standort ist es wirtschaftlich sinnvoll, die stoffliche Ausbeute hinsichtlich der organischen Bestandteile quantitativ zu führen. Die im Sumpf des Primär-Reaktors vorhandenen, in flüssige Form überführten organischen Bestandteile können
ebenso über thermische Prozesse genutzt werden.

Bevorzugt erfolgt dies auf dem Weg der thermischen Vergasung, besonders bevorzugt nach modifizierten Schwarzlaugenvergasungsverfahren bei denen die Vergasung unter Druck stattfindet, so dass die Kondensation des Lösungswassers nach der Vergasung genutzt werden kann. Das durch die Vergasung produzierte Gas kann für energetische oder stoffliche Zwecke weiterverarbeitet werden.

Je nach konkreten Standortbedingungen kann eine rein thermische Weiterverarbeitung oder eine maximale Stoffgewinnung oder eine Kombination aus beidem sinnvoll sein.

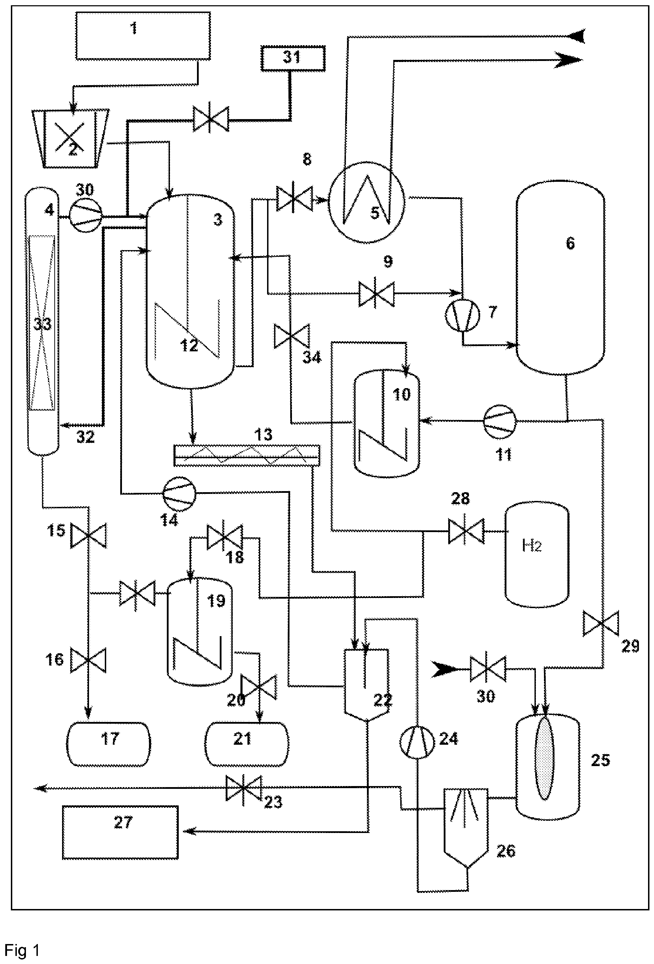

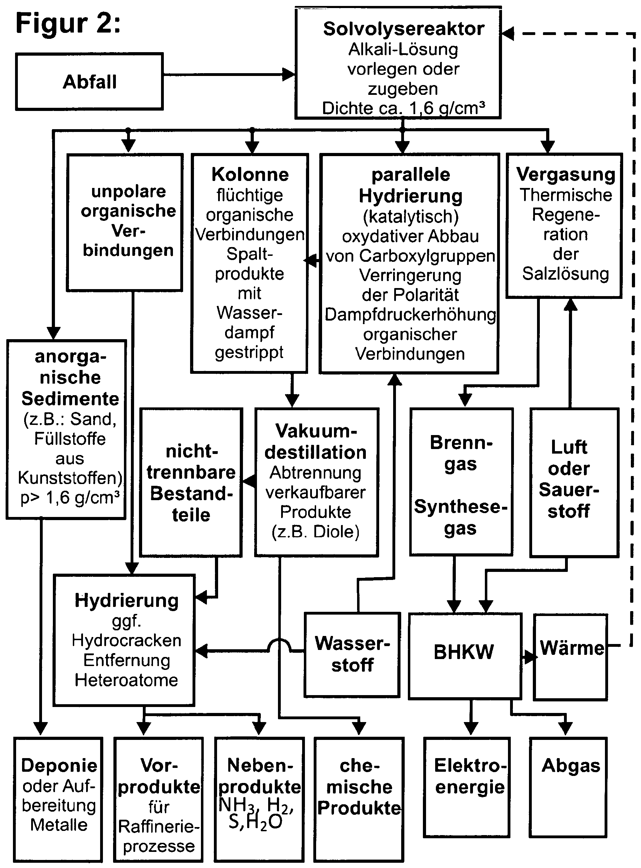

Anhand der Figuren 1 und 2 soll der erfindungsgemäße Gegenstand näher erläutert werden, ohne diesen auf die hier gezeigten speziellen Ausführungsformen einschränken zu wollen.

## Patentansprüche

1. Verfahren zur Herstellung von Synthesegas und / oder flüssigen Rohstoffen und / oder Energieträgern aus Abfällen und / oder Biomassen mit folgenden Schritten:
a) Solvolyse der organischen Bestandteile des Abfalls in einer alkalischen Lösung unter Zusatz organischer Lösungsmittel bei einer Temperatur im Bereich von 150 bis 250 °C und einem Druck von 3 bis 12 bar in einem Rührkessel mit mechanischem Rührwerk oder in einem Umlaufreaktor, wobei die organischen Bestandteile in mindestens eine flüssige Phase überführt und die anorganischen Bestandteile sedimentiert werden,
b) Abtrennung der anorganischen Bestandteile aus der flüssigen Phase mittels physikalischer Trennmethoden,
c) Überführung des bei der Solvolyse entstehenden Schleppdampfes in eine Rektifikationskolonne, in der die organischen Bestandteile des Dampfes vom Wasser bzw. dem Schleppdampf getrennt werden und wieder Zuführen des an organischen Bestandteilen abgereicherten Schleppdampfes in den Rührkessel bzw. den Umlaufreaktor,
d) weitere Auftrennung der organischen Bestandteile durch Rektifikation, Extraktion oder Sorption und/oder Überführung durch thermische Vergasung in Brenn- oder Synthesegas.

2. Verfahren nach Anspruch 1,
**dadurch gekennzeichnet, dass** die Solvolyse als Batch- oder quasi kontinuierliches Semi-Batchverfahren im Umlaufreaktor oder Rührkessel durchgeführt wird, wobei vorzugsweise die alkalische Lösung vorgelegt wird und eine quasi-kontinuierliche Zuführung des Abfalls, insbesondere mittels Stopfschnecken oder Kolbenpressen, im Semi-Batch-Betrieb erfolgt.

3. Verfahren nach einem der vorhergehenden Ansprüche,
**dadurch gekennzeichnet, dass** die Zuführung des Abfalls im Chargenbetrieb durch Öffnen des Reaktors und Eintragung des Abfalls erfolgt und anschließend die alkalische Lösung zugesetzt wird.

4. Verfahren nach einem der vorhergehenden Ansprüche,
**dadurch gekennzeichnet, dass** die Zufuhr von Wärme während der Solvolyse durch mindestens einen Wärmetauscher oder mit im Prozess eingesetzten Wärmeträgern, insbesondere Dampf oder Thermoöl, erfolgt.

5. Verfahren nach einem der vorhergehenden Ansprüche,
**dadurch gekennzeichnet, dass** die Reaktionszeit für die Solvolyse im Bereich von 2 bis 20 h liegt.

6. Verfahren nach einem der vorhergehenden Ansprüche,
**dadurch gekennzeichnet, dass** als alkalische Lösung eine wässrige Lösung bzw. Hydratschmelze enthaltend 40 bis 70 Gew.-% eines Alkalikarbonats oder Alkali-Hydroxids, bevorzugt Kaliumkarbonat eingesetzt wird.

7. Verfahren nach einem der vorhergehenden Ansprüche,
**dadurch gekennzeichnet, dass** der alkalischen Lösung organische Lösungsmittel ausgewählt aus der Gruppe der Kohlenwasserstoffe bestehend aus aliphatischen oder aromatischen Kohlenwasserstoffen und Mischungen hiervon zugesetzt werden.

8. Verfahren nach einem der vorhergehenden Ansprüche,
**dadurch gekennzeichnet, dass** die alkalische Lösung eine Dichte im Bereich von 1,3 bis 1,7 g/cm³ besitzt.

9. Verfahren nach einem der vorhergehenden Ansprüche,
**dadurch gekennzeichnet, dass** die anorganischen Bestandteile durch mindestens eine Austragsvorrichtung kontinuierlich oder chargenweise entfernt und anschließend mit recyclierter alkalischer Lösung und/oder Wasser gewaschen werden.

10. Verfahren nach einem der vorhergehenden Ansprüche,
**dadurch gekennzeichnet, dass** aus den anorganischen Bestandteilen Metalle mittels chemischer Verfahren oder elektrochemischer Trennverfahren, vorzugsweise mittels Elektroraffinition oder galvanischer Verfahren, abgetrennt werden.

11. Verfahren nach einem der vorhergehenden Ansprüche,
**dadurch gekennzeichnet, dass** die Rektifikationskolonne, eine Füllkörperkolonne ist.

12. Verfahren nach einem der vorhergehenden Ansprüche,
**dadurch gekennzeichnet, dass** im Anschluss an die Rektifikationskolonne mit einem Druckregler der Druck im System konstant gehalten wird.

13. Verfahren nach einem der vorhergehenden Ansprüche,
**dadurch gekennzeichnet, dass** die weitere Auftrennung der organischen Bestandteile durch Vakuumdestillation erfolgt.

14. Verfahren nach einem der vorhergehenden Ansprüche,
**dadurch gekennzeichnet, dass** nach der Solvolyse eine partielle Hydrierung, insbesondere unter Verwendung von Raney-Nickel als Katalysator, zumindest eines Teils der organischen Bestandteile mit einem zu geringen Dampfdruck erfolgt, durch die die Polarität dieser organischen Bestandteile erniedrigt und damit deren Dampfdruck erhöht wird.

15. Verfahren nach einem der vorhergehenden Ansprüche,
**dadurch gekennzeichnet, dass** die nach der Solvolyse in flüssiger Form vorliegenden organischen Bestandteile einer Hydrierung, insbesondere unter Verwendung von Raney-Nickel als Katalysator, zur Entfernung von Heteroatomen und/oder einem Hydrocracking unterzogen werden.

## Claims

1. Process for the production of synthesis gas and/or liquid raw materials and/or energy resources from waste and/or biomass with the following stages:
a) Solvolysis of the organic components of the waste in an alkaline solution with addition of organic solvents within a temperature range of 150 to 250 C and a pressure of 3 to 12 bar in an agitated tank with mechanical stirrer or in a circulation reactor, wherein the organic components are converted in at least one liquid phase and the inorganic components are sedimented,
b) Separation of the inorganic components from the liquid phase using physical separation methods,
c) Transfer of the drag vapor generated during the solvolysis phase into a rectification column in which the organic components of the vapor are separated from the water or the drag vapor, and again feeding of the drag vapor, now depleted from the organic components, back into the agitated tank or the circulation reactor,
d) further separation of the organic components by rectification, extraction or sorption and/or transfer by thermal gasifiation into combustion or synthesis gas.

2. Method according to claim 1,
**characterized in that** the solvolysis process works as a batch or as a quasi-continuous semi-batch process in the circulation reactor or an agitated tank, whereby preferably the alkaline solution is fed into the tank and a the feeding of the waste happens quasi-continuously, in particular by means of screw or piston presses, in semi-batch mode.

3. Method according to one of the preceding claims,
**characterized in that** the feeding of the waste in batch operation happens by opening the reactor and feeding of the waste and subsequent adding of the alkaline solution.

4. Method according to one of the preceding claims,
**characterized in that** the supply of heat during the solvolysis process happens with at least one heat exchanger or with added heat transfer, in particular steam or thermal oil.

5. Method according to one of the preceding claims,
**characterized in that** the reaction time for the solvolysis is in the range of 2 to 20 hours.

6. Method according to one of the preceding claims,
**characterized in that** as alkaline solution an aqueous solution or hydrate melt containing 40 to 70 wt-% of an alkali carbonate or alkali hydroxide, preferably potassium carbonate is used.

7. Method according to one of the preceding claims,
**characterized in that** organic solvents are added to the alkaline solution, selected from the group of hydrocarbons consisting of aliphatic or aromatic hydrocarbons and mixtures thereof.

8. Method according to one of the preceding claims,
**characterized in that** the alkaline solution has a density in the range of 1,3 to 1,7 g/cm³.

9. Method according to one of the preceding claims,
**characterized in that** the inorganic components are extracted continuously or batchwise with at least one discharge device and subsequently washed with a recycled alkaline solution and/or water.

10. The method according to any one of the preceding claims,
**characterized in that** from the inorganic components metals are separated by means of chemical processes or electrochemical separation processes, preferably by means of electrorefining or galvanic processes.

11. The method according to any one of the preceding claims,
**characterized in that** the rectification column is a column packed with filling material.

12. The method according to any one of the preceding claims,
**characterized in that** a pressure controller is connected to the rectification column, which maintains a constant pressure in the system.

13. The method according to any one of the preceding claims,
**characterized in that** the further separation of the organic components is executed by vacuum distillation.

14. The method according to any one of the preceding claims,
**characterized in that** after the solvolysis process a partial hydrogenation happens, especially by using Raney-Nickel as a catalyst. The hydrogenation is applied to at least that portion of the organic components with a too low vapor pressure, which lowers the polarity of these organic components and accordinly increases the vapor pressure.

15. The method according to any one of the preceding claims,
**characterized in that** after the solvolysis organic components in liquid form are treated by hydrocracking and/or hydrogenation, in particular by using Raney-Nickel as a catalyst, in order to remove heteroatoms.

## Revendications

1. Procédé de production de gaz de synthèse et / ou de matières premières liquides et / ou des sources d'énergie issues des déchets et / ou de la biomasse avec les étapes suivantes:
a) Solvolyse des composants organiques des déchets dans une solution alcaline avec l'addition de solvants organiques à une température de l'ordre de 150 à 250 °C et une pression de 3 à 12 bar en une cuve agitée avec agitateur mécanique ou dans un réacteur de circulation, dans lequel les composants organiques sont transférés dans au moins une phase liquide, et les composants inorganiques sont sédimentés,
b) séparation des constituants inorganiques de la phase liquide en utilisant des méthodes de séparation physique,
c) transfert de vapeur entraînée résultant dans la solvolyse dans une colonne de rectification dans laquelle les composants organiques de la vapeur sont séparées de l'eau ou de la vapeur entraînée, et alimentation à nouveau de la vapeur entraînée (maintenant réduit en composants organiques) dans le réservoir agité ou le réacteur de circulation,
d) une séparation supplémentaire des constituants organiques par rectification, extraction ou sorption et / ou conversion par gazéification thermique dans le gaz de combustion ou le gaz de synthèse.

2. Procédé selon la revendication 1,
**caractérisé en ce que** la solvolyse est effectuée en batch (en lot) ou en procédé quasi continue semi-batch dans un réacteur de circulation ou dans un réservoir agité, dans lequel de préférence la solution alcaline est versée et ensuite la fourniture quasi-continue de déchets est effectué, notamment par presses à vis ou à piston, en mode semi-continu.

3. Procédé selon l'une des revendications précédentes,
**caractérisé en ce que** la fourniture des déchets en batch (lots) est effectuée par l'ouverture du réacteur et le chargement des ordures et en suite la solution alcaline est ajoutée.

4. Procédé selon l'une des revendications précédentes,
**caractérisé en ce que** l'apport de chaleur pendant la solvolyse est effectué à travers au moins par un échangeur de chaleur ou en utilisant un porteur de chaleur du procédé, en particulier de la vapeur
ou de l'huile thermique.

5. Procédé selon l'une des revendications précédentes,
**caractérisé en ce que** le temps de réaction pour la solvolyse est dans l'ordre de 2 à 20 heures.

6. Procédé selon l'une des revendications précédentes,
**caractérisé en ce que**, comme solution alcaline une solution aqueuse ou une masse fondue hydratée est utilisée contenant 40 à 70% en poids d'un carbonate alcalin ou un hydroxyde alcalin, de préférence du carbonate de potassium.

7. Procédé selon l'une des revendications précédentes,
**caractérisé en ce que** dans la solution alcaline des solvants organique sont ajoutés, choisi de la groupe des hydrocarbures aliphatiques ou aromatiques.

8. Procédé selon l'une des revendications précédentes,
**caractérisé en ce que** la solution alcaline a une densité dans l'ordre 1,3 à 1,7 g/cm³.

9. Procédé selon l'une des revendications précédentes,
**caractérisé en ce que** les constituants inorganiques sont remplacés par au moins un dispositif de décharge en continu ou en discontinu qui en suite est lavé avec la solution alcaline recyclée et / ou avec de l'eau.

10. Procédé selon l'une quelconque des revendications précédentes,
**caractérisé en ce que** des composants inorganiques les métaux sont séparés par des procédés chimiques ou électrochimiques, de préférence au moyen de raffinage électrique (électrorefining) ou de processus galvaniques.

11. Procédé selon l'une quelconque des revendications précédentes,
**caractérisé en ce que** la colonne de rectification est un colonne rempli du matie de remplissage.

12. Procédé selon l'une quelconque des revendications précédentes,
**caractérisé en ce que** suite à la colonne de rectification la pression dans le système est maintenue constante par un régulateur de pression.

13. Procédé selon l'une quelconque des revendications précédentes,
**caractérisé en ce que** la séparation supplémentaire de la matière organique ce fait par distillation sous vide.

14. Procédé selon l'une quelconque des revendications précédentes,
**caractérisé en ce qu'**après la solvolyse, une hydratation partielle des composants organiques avec un pression vapeur trop faible a lieu, en particulier en utilisant un catalyseur Raney-Nickel. La pression de vapeur est causée par la polarité de ces constituants organiques abaissé et ainsi leur pression de vapeur est augmentée.

15. Procédé selon l'une quelconque des revendications précédentes,
**caractérisé en ce qu'**après la solvolyse les constituants organiques sous forme liquide sont traités par hydrogénation ou par hydrocraquage, en particulier en utilisant un catalyseur type Raney-Nickel, pour éliminer les Hétéroatomes
